# EUROPEAN PATENT SPECIFICATION

(11) **EP 3 323 114 B1**
(45) Date of publication and mention of the grant of the patent: **08.04.2020**
(21) Application number: 16741509.0
(22) Date of filing: 13.07.2016
(51) Int. Cl.: G08B 1/08

(54) **SAFETY AUTOMATION SYSTEM**
SICHERHEITSAUTOMATIONSSYSTEM
SYSTÈME D'AUTOMATISATION DE SÉCURITÉ

(30) Priority: 13.07.2015 US 201562191800 P
(43) Date of publication of application: 23.05.2018
(73) Proprietor: Carrier Corporation, Farmington, Connecticut 06032 (US)
(72) Inventor: ZRIBI, Anis, Colorado Springs, Colorado 80919 (US); SILVER, Travis, Colorado Springs, Colorado 80919 (US); HUGHES, Jonathon, Mebane, North Carolina 27302 (US); ANDRES, John, Mebane, North Carolina 27302 (US); ROVENSTINE, Chris, Mebane, North Carolina 27302 (US); CURLEY, Sean, Mebane, North Carolina 27302 (US); RICHARDS, Michael L., Colorado Springs, Colorado 80919 (US)
(74) Representative: Dehns
(86) International application number: PCT/US2016/041995
(87) International publication number: WO 2017/011501

(56) References cited:
- WO-A1-2014/196836
- GB-A- 2 407 719
- US-A1- 2006 044 133
- US-A1- 2013 063 263
- US-B1- 9 030 319

## Description

The present disclosure relates to a safety automation system and, more particularly, to a system having a wireless computing management system with audible signature recognition capability.

The expansion of home automation and associated technologies is known to enhance the life and safety of occupants by leveraging fire safety devices in conjunction with various alert devices, thus adding value to connected ecosystems in homes and other occupiable structures. Further development of home automation as it relates to any hazard condition and the protection of occupants and other individuals is desirable.

WO 2014/196836 discloses an acoustic event detecting apparatus using frequency characteristics of an acoustic input to determine if an acoustic event has occurred.

The invention provides a safety automation system for an occupiable structure, the system comprising: a detection device configured to detect a hazard condition and send an initiate alarm signal to an alert device; the alert device being configured to produce an audible alert as the audible signature, the audible alert being indicative of the hazard condition; a microphone configured to receive the audible signature and output an audible signature signal, wherein the microphone is part of the alert device, the alert device having dual functioning circuitry for producing the audible alert and detecting the audible signature; a computing management system configured to receive the audible signature signal and output a command signal; and an appliance configured to receive the command signal from the computing management system and perform a task in response to the command signal; wherein the computing management system includes a cloud computing network; and wherein the computing management system is configured to send a wireless signal indicative of the audible signature signal through the cloud computing network, to a user interface device remotely located from the occupiable structure.

The detection device may be least one of a smoke, carbon monoxide, toxic gas, and flammable gas detectors.

The computing management system may include a hub and a router for receiving the signature signal and outputting a notification signal to the cloud computing network.

The hub and the router may be located in the occupiable structure.

The appliance may be a HVAC system.

The appliance may be an electrically actuated lock.

The appliance may be a kitchen appliance.

The appliance may be hazard abatement equipment.

The audible signature signal and the command signal may be sent over a wireless path.

The microphone may be part of a listening device in the occupiable structure, which is configured to output the audible signature signal wirelessly.

The microphone may be part of a smoke detector having dual functioning circuitry for producing an audible alarm and detecting an audible signature.

The foregoing features and elements may be combined in various combinations without exclusivity, unless expressly indicated otherwise. These features and elements as well as the operation thereof will become more apparent in light of the following description and the accompanying drawings. However, it should be understood that the following description and drawings are intended to be exemplary in nature and non-limiting.

Various features will become apparent to those skilled in the art from the following detailed description of the disclosed non-limiting embodiments. The drawings that accompany the detailed description can be briefly described as follows:
FIG. 1 is an exploded perspective view of an occupiable structure illustrated as an application for a safety automation system;
FIG. 2 is a system diagram of the safety automation system; and
FIG. 3 is a schematic of a computing management system of the safety automation system.

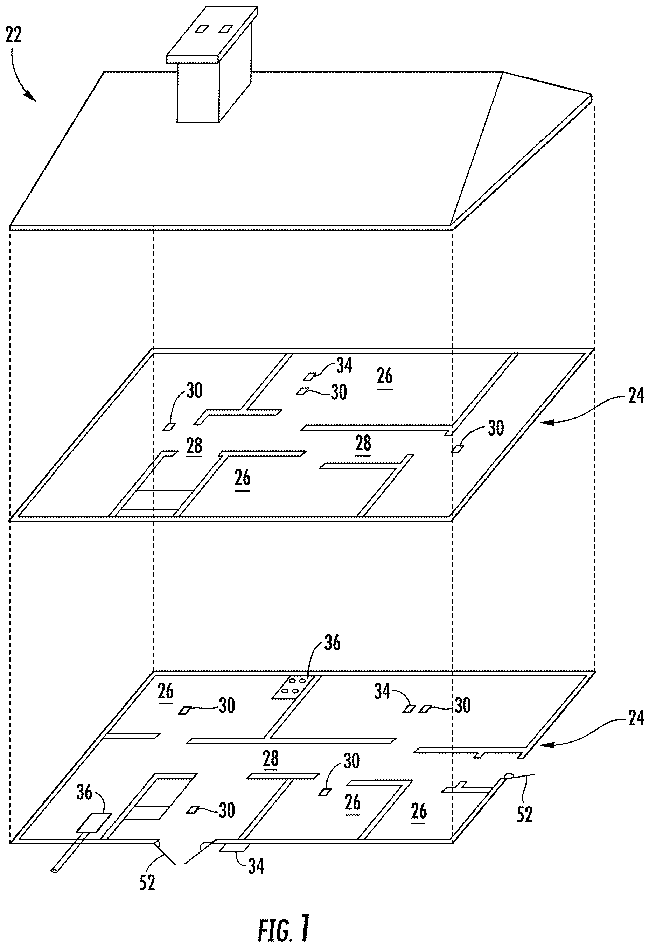

Referring to FIG. 1, an exemplary embodiment of a safety automation system 20 is illustrated and may be applied to occupiable structures 22 such as, for example, residential homes, apartment buildings, commercial buildings, ships, service centers such as hospitals and hotels, and other structures. The occupiable structure 22 may have any number of floors 24 each having any number of rooms 26. The floors 24 and rooms 26 may be interconnected by a plurality of routes 28 (i.e., entry and egress) that may include hallways, stairs, elevators, and others.

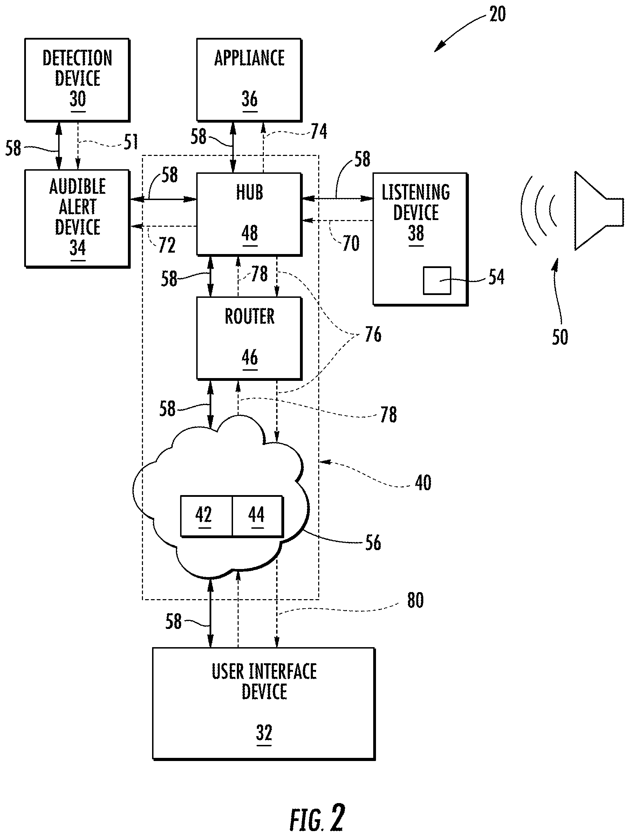

Referring to FIGS. 1 and 2, the safety automation system 20 may include an assortment of hardware such as: hazard detection and/or monitoring devices 30; user interface devices 32; alert devices 34; appliances 36; a listening device 38; and a computing management system 40 that may include a computer processor 42, a computer readable storage medium 44, a router 46 and a hub 48.

The detection devices 30 may generally be located in or on the occupiable structure 22 and may be constructed to detect hazards including smoke, fire, toxic gases, explosive gases, temperature extremes, rate of temperature change, intrusion, and others. Non-limiting examples of a detection device 30 may include fire detectors (e.g., smoke based, heat based and flame based), hazardous gas detectors (e.g., carbon monoxide, methane, propane, formaldehyde, radon, etc.), security detectors (e.g., motion, entry intrusion, door contacts, intrusion detection cameras, etc.), and other types. It is further contemplated and understood that the detection device 30 may be packaged together (i.e., same housing) with the alert device 34. One example of such packaging may be found in smoke detectors.

The user interface device 32 may be locally or remotely located and may generally alert the user of a detected hazard, any action the management system 40 may have taken, an option to cancel the action, and/or silence the audible alert devices 34. The interface device 32 may further provide additional information and user assistance such as the option to contact first responders, family, and/or neighbors. Additionally the user interface device 32 may include interactive prompts that may be selected by the user (e.g., use of a mouse and cursor, touching the prompt on a touch screen environment, by issuing a voice command in a voice control I/O environment, etc.) to issue a command. Non-limiting examples of a user interface device 32 may include a computer monitor or screen (e.g., tablet, desktop and laptop), a cellular telephone (i.e., smart phone), a media player (or other handheld or portable electronic device), a wrist-watch device, a pendant device, a headphone or ear-piece device, a router, an embedded system with electronic equipment and a display mounted in a kiosk or automobile, equipment that implements the functionality of two or more of these devices, and others.

The alert devices 34 may generally be located in or at the occupiable structure 22 and may further be integrated into any one or more of the variety of detection devices 30. Alert devices 34 function to audibly alert occupants and others of when the detection device 30 detects a hazard condition (and thus sends an initiate alarm signal 51 to the alert device 34). This audible alert or acoustic signature 50 (see FIG. 2) may be any machine recognizable sound including a series of beeps, buzzes, a programmed voice message and others. The alert device 34 may provide appropriate alerts for any one of a plurality of hazard conditions including smoke, fire, carbon monoxide, security, and others. It is further contemplated and understood that an occupant in the structure 22 may generally be an alert device 34 for purposes of making verbal sounds as an example of an acoustic signature 50. Such verbal sounds need not be for purposes of a hazard alert, and may be associated with any variety of communications desired by the occupant. Moreover, acoustic signatures 50 may be sounds produced by an intruder in the structure 22, verbal or otherwise.

The appliances 36 may include a wide variety of apparatuses generally associated with or located in the occupiable structure 22. Hazard abatement equipment may be one non-limiting example that may include fire suppression systems (e.g., sprinkler systems and chemical fire suppressor dispensing systems, etc.) or other equipment designed to subdue or eliminate a hazard condition. Everyday usage equipment may also be examples of appliances 36. Such equipment may include locks, that may be electric (e.g. servo actuated and magnetically actuated), at entry points 52 of the structure 22, kitchen appliances (e.g., refrigerators, stoves, ovens, etc.), and entertainment systems (e.g., television, stereo equipment, etc.). Utility equipment is yet another example of appliances 36 and may include heating and cooling systems (HVAC), a combustible gas or water main entering the structure, an electric load center, and others.

Each appliance 36 is configured to perform a pre-specified task as instructed by the computing management system 40. For example, tasks may include a lock appliance moving in an unlocked position, a fire suppression system initializing to suppress a detect fire condition, a smart television turning on and broadcasting a pre-determined message in response to a detected hazard condition, stoves and ovens turning off in response to a combustible gas condition, a HVAC system shutting down in response to a smoke condition, a combustible gas main isolating in response to a fire condition, a water main shutting off in response to a below freezing temperature condition, and other tasks by other appliances.

The listening device 38 may include a microphone 54 and circuitry configured to listen, and receive as input, the acoustic signatures 50, and output a signal to the hub 48 of the management system 40. Circuitry of the listening device 38 may be configured to identify noise frequency, and/or noise patterns (e.g., the delay between a series of beeps or duration of each beep), and may further be configured with voice recognition capability. One, non-limiting, example of a listening device 38 may include existing circuitry in traditional alert devices 34 such as, for example, a fire alarm.

More specifically, the safety automation system 20 may leverage the audible alert devices 34 and/or certain appliances 36 that may be equipped with a microphone 54. The circuitry of such alert devices 34 and/or appliances 36, although traditionally used to produce an audible sound, is dual functioning and also equipped to act as a microphone 54 (albeit, not traditionally used as a microphone). For example, the buzzer or beeper of a smoke detector may be piezoelectric and capable of achieving a dual function, for example, as the microphone 54.

The computing management system 40 may generally be part of a cloud computing network 56 that allows application software to be operated using internet-enabled devices. The hub 48 and router 46 of the system 40 may be located in the structure 22. The processor 42 and computer readable storage medium 44 may be part of the cloud computing network 56. It is further contemplated and understood that the processor 42 and storage medium 44 may not be part of a cloud computing network, and/or other computer based processors and storage mediums may exist elsewhere in the system 40, such as the hub 48.

The devices 30, 32, 34, 38, appliances 36 and/or computing management system 40 may be powered via direct (e.g., batteries) or alternating current, and may be interlinked via paths 58 to establish a network of a plurality of devices 30, 32, 34, 38, appliances 36, and/or the computing management system 40. The communication paths 58 may include wired and/or wireless pathways. Non-limiting examples of wired paths 58 may include paths that pass through the internet, local area network equipment, and other networks. Non-limiting examples of wireless paths 58 may include cellular telephone network paths, local area network paths, and others. Each path 58 enables the sending of communication, notification and/or command signals.

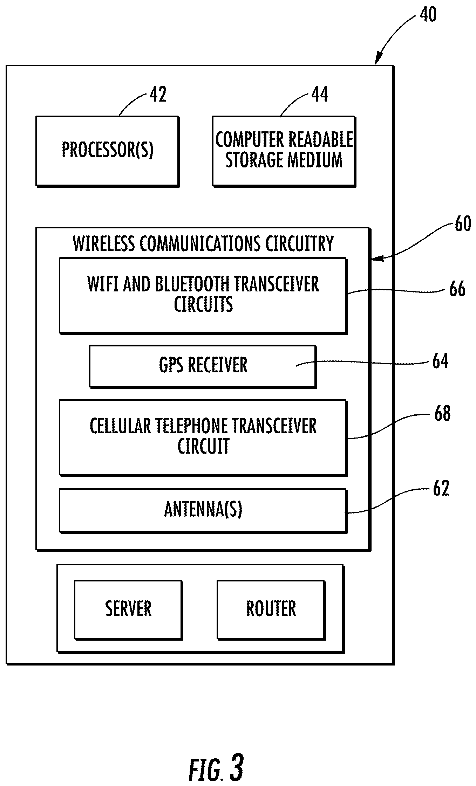

Referring to FIG. 3, the computing management system 40 of the system 20 may include control circuitry such as the processor 42 and the computer readable storage medium 44. The storage medium 44 may include hard disk drive storage, nonvolatile memory (e.g., flash memory or other electrically-programmable-read-only memory configured to form a solid state drive), volatile memory (e.g., static or dynamic random-access-memory), and others. The processor 42 and storage medium 44 may be used to control and/or receive signals from any one or more of the devices 30, 32, 34, 38, hub 48 and appliances 36. The processor 42 may be based on one or more microprocessors, microcontrollers, digital signal processors, baseband processors, power management units, audio codec chips, application specific integrated circuits, and others.

The processor 42 may be used to run software such as internet browsing applications, voice-over-internet-protocol (VOIP) telephone call applications, email applications, media playback applications, operating system functions, and others. To support interactions with external devices and appliances, the processor 42 may be used in implementing communications protocols. Such communication protocols may include internet protocols, and wireless local area network protocols (e.g. WiFi®), protocols for other short-range wireless communications links such as the Bluetooth® protocol, cellular telephone protocols, and others.

The computing management system 40 may further include wireless communications circuitry 60 that may include radio-frequency (RF) transceiver circuit, power amplifier circuit, low-noise input amplifiers, passive RF components, at least one antenna 62, and other components for receiving and broadcasting RF wireless signals over paths 58. Circuitry 60 may further include a satellite navigation system receiver circuit 64, a wireless local area network transceiver circuit 66, cellular telephone transceiver circuit 68, and others. The wireless local area network transceiver circuit 66 may handle pre-specified frequency bands for WiFi® and/or Bluetooth® protocols. Although not illustrated, the wireless communication circuitry 60 may also include wireless circuits for receiving signals from radios, televisions, pagers, and others.

In operation, the microphone 54 of the listening device 38 listens for an acoustic signature 50. With an input of a signature 50, circuitry of the listening device 38 generates and outputs a signature signal 70 to the hub 48. The hub 48 may then process this signal 70 and send a command signal 72 to an alert device 34 to, as one example, initiate an alarm. Alternatively, or in addition thereto, the hub 48 may send a command signal 74 to any number of a plurality of appliances 36. For example, if the audible signature 50 is the beeping of an alert device 34 of a smoke detector, the command signal 74 may instruct a HVAC appliance 36 to close specified duct dampers to minimize the spread of smoke through-out the structure. As another example, the appliance 36 may be electric locks located at the entry points 52 of the structure 22. The command signal 74 may instruct the locks to move to an unlocked-position to assist first responder entry and occupant egress.

Alternatively, or in addition thereto, the hub 48 may send a notification signal 76 to the cloud computing network 56 via the router 46. The processor 42 of the network 56 may then generate a command signal 78 sent back to the hub 48 via the router 46 which, inturn, sends command signals 72, 74 to the respective alert devices and/or appliances. During about the same time, afterwards, or alternatively, the network 56 may output a notification signal 80 to the user interface device 32. Generated from the signal 80, the interface device 32 may provide the user with an assortment of information such as information on the originating acoustic signature 50, the resulting steps taken by the system, and any relevant surrounding information. The user may then have the opportunity to issue commands to the network 56 of the management system 40 remotely. It is further contemplated and understood that the notification signal 80 may be a command signal prompting the user of the interface device 32 to, for example, silence an alarm or call pre-designated first responders (e.g., fire department).

The management system 44 may further provide an assortment of preprogrammed information (i.e., computer readable data) to the user or occupant based on a hazard condition detected via the listening device 38. For example, if a fire 74 is detected, contact information of the nearest fire department may be provided. If an intruder is detected, contact information of the nearest police department may be provided. Yet further, the management system 44 may contact the user via the user interface device 32 with other information not initiated by a hazard detection. For example, other information may include a voice message detected by an occupant of the structure 22, picked-up by the listening device 38, and transferred to the user interface 32 via the management system 40.

While the present disclosure is described with reference to exemplary embodiments, it will be understood by those skilled in the art that various changes may be made and equivalents may be substituted without departing from the scope of the present invention, as defined by the claims. In addition, various modifications may be applied to adapt the teachings of the present disclosure to particular situations, applications, and/or materials, without departing from the scope thereof. The present invention is thus not limited to the particular examples disclosed herein, but includes all embodiments falling within the scope of the appended claims.

## Claims

1. A safety automation system for an occupiable structure (22), the system comprising:
a detection device (30) configured to detect a hazard condition and send an initiate alarm signal to an alert device (34);
the alert device (34) configured to produce an audible alert as an audible signature, the audible alert being indicative of the hazard condition;
a microphone (54) configured to receive the audible signature and output an audible signature signal; wherein the microphone is part of the alert device, the alert device having dual functioning circuitry for producing the audible alert and detecting the audible signature;
a computing management system (40) configured to receive the audible signature signal and output a command signal; and
an appliance (36) configured to receive the command signal from the computing management system (40) and perform a task in response to the command signal;
wherein the computing management system (40) includes a cloud computing network (56); and
wherein the computing management system (40) is configured to send a wireless signal indicative of the audible signature signal through the cloud computing network (56), to a user interface device (32) remotely located from the occupiable structure (22).

2. The safety automation system set forth in claim 1, wherein the detection device (30) is at least one of a smoke, carbon monoxide, toxic gas, and flammable gas detectors.

3. The safety automation system set forth in claim 1, wherein the computing management system (40) includes a hub (48) and a router (46) for receiving the signature signal and outputting a notification signal to the cloud computing network (56).

4. The safety automation system set forth in claim 3, wherein the hub and the router are located in the occupiable structure (22).

5. The safety automation system set forth in claim 1, wherein the appliance (36) is a HVAC system.

6. The safety automation system set forth in claim 1, wherein the appliance (36) is an electrically actuated lock.

7. The safety automation system set forth in claim 1, wherein the appliance (36) is a kitchen appliance.

8. The safety automation system set forth in claim 1, wherein the appliance (36) is hazard abatement equipment.

9. The safety automation system set forth in claim 1, wherein the audible signature signal and the command signal are sent over a wireless path.

10. The safety automation system set forth in claim 1, wherein the microphone (54) is part of a smoke detector having dual functioning circuitry for producing an audible alarm and detecting an audible signature.

## Patentansprüche

1. Sicherheitsautomationssystem für eine besetzbare Struktur (22), wobei das System Folgendes umfasst:
eine Erfassungsvorrichtung (30), die dazu konfiguriert ist, einen Gefahrenzustand zu erfassen und ein einleitendes Alarmsignal an eine Warnvorrichtung (34) zu senden;
die Warnvorrichtung (34), die dazu konfiguriert ist, eine akustische Warnung als akustische Signatur zu erzeugen,
wobei die akustische Warnung den Gefahrenzustand anzeigt;
ein Mikrofon (54), das dazu konfiguriert ist, die akustische Signatur zu empfangen und ein akustisches Signatursignal auszugeben; wobei das Mikrofon Bestandteil der Warnvorrichtung ist, wobei die Warnvorrichtung eine Doppelfunktionsschaltung zum Erzeugen der akustischen Warnung und zum Erfassen der akustischen Signatur aufweist;
ein Datenverarbeitungs-Verwaltungssystem (40), das dazu konfiguriert ist, das akustische Signatursignal zu empfangen und ein Befehlssignal auszugeben; und
eine Vorrichtung (36), die dazu konfiguriert ist, das Befehlssignal von dem Datenverarbeitungs-Verwaltungssystem (40) zu empfangen und als Antwort auf das Befehlssignal eine Aufgabe auszuführen;
wobei das Datenverarbeitungs-Verwaltungssystem (40) ein Cloud-Computing-Netzwerk (56) beinhaltet; und
wobei das Datenverarbeitungs-Verwaltungssystem (40) dazu konfiguriert ist, ein Funksignal zum Anzeigen des akustischen Signatursignals durch das Cloud-Computing-Netzwerk (56) an eine Benutzerschnittstellenvorrichtung (32) zu senden, die entfernt von der besetzbaren Struktur (22) angeordnet ist.

2. Sicherheitsautomationssystem nach Anspruch 1, wobei die Erfassungsvorrichtung (30) zumindest eines von einem Rauch-, Kohlenmonoxid-, Giftgas- und einem Detektor für entflammbares Gas ist.

3. Sicherheitsautomationssystem nach Anspruch 1, wobei das Datenverarbeitungs-Verwaltungssystem (40) eine Nabe (48) und einen Router (46) zum Empfangen des Signatursignals und zum Ausgeben eines Benachrichtigungssignals an das Cloud-Computing-Netzwerk (56) beinhaltet.

4. Sicherheitsautomationssystem nach Anspruch 3, wobei sich die Nabe und der Router in der besetzbaren Struktur (22) befinden.

5. Sicherheitsautomationssystem nach Anspruch 1, wobei die Vorrichtung (36) ein HVAC-System [Heizungs-, Lüftungs- und Klimatisierungssystem] ist.

6. Sicherheitsautomationssystem nach Anspruch 1, wobei die Vorrichtung (36) ein elektrisch betriebenes Schloss ist.

7. Sicherheitsautomationssystem nach Anspruch 1, wobei die Vorrichtung (36) ein Küchengerät ist.

8. Sicherheitsautomationssystem nach Anspruch 1, wobei die Vorrichtung (36) eine Gefahrenschutzausrüstung ist.

9. Sicherheitsautomationssystem nach Anspruch 1, wobei das akustische Signatursignal und das Befehlssignal über einen drahtlosen Weg gesendet werden.

10. Sicherheitsautomationssystem nach Anspruch 1, wobei das Mikrofon (54) Bestandteil eines Rauchdetektors mit Doppelfunktionsschaltung zum Erzeugen einer akustischen Warnung und zum Erfassen einer akustischen Signatur ist.

## Revendications

1. Système d'automatisation de sécurité pour une structure susceptible d'être occupée (22), le système comprenant :
un dispositif de détection (30) configuré pour détecter une condition de danger et envoyer un signal d'alarme de déclenchement à un dispositif d'alerte (34) ;
le dispositif d'alerte (34) conçu pour produire une alerte audible en tant que signature audible,
l'alerte audible indiquant la condition de danger ;
un microphone (54) conçu pour recevoir la signature audible et émettre un signal de signature audible ; dans lequel le microphone fait partie du dispositif d'alerte, le dispositif d'alerte ayant un double circuit de fonctionnement pour produire l'alerte audible et détecter la signature audible ;
un système de gestion informatique (40) conçu pour recevoir le signal de signature audible et mettre un signal de commande ; et
un appareil (36) conçu pour recevoir le signal de commande du système de gestion informatique (40) et pour exécuter une tâche en réponse au signal de commande ;
dans le système de gestion informatique (40) comprend un réseau informatique en nuage (56) ; et
dans lequel le système de gestion informatique (40) est conçu pour envoyer un signal sans fil indiquant le signal de signature audible à un dispositif d'interface utilisateur (32) situé à distance de la structure susceptible d'être occupée (22), via le réseau informatique en nuage (56).

2. Système d'automatisation de sécurité selon la revendication 1, dans lequel le dispositif de détection (30) est au moins l'un d'un détecteur de fumée, d'un détecteur de monoxyde de carbone, d'un détecteur de gaz toxique et d'un détecteur de gaz inflammable.

3. Système d'automatisation de sécurité selon la revendication 1, dans lequel le système de gestion informatique (40) comprend un concentrateur (48) et un routeur (46) pour recevoir le signal de signature et émettre un signal de notification vers le réseau informatique en nuage (56).

4. Système d'automatisation de sécurité selon la revendication 3, dans lequel le concentrateur et le routeur sont situés dans la structure susceptible d'être occupée (22).

5. Système d'automatisation de sécurité selon la revendication 1, dans lequel l'appareil (36) est un système HVAC.

6. Système d'automatisation de sécurité selon la revendication 1, dans lequel l'appareil (36) est un verrou actionné électriquement.

7. Système d'automatisation de sécurité selon la revendication 1, dans lequel l'appareil (36) est un appareil de cuisine.

8. Système d'automatisation de sécurité selon la revendication 1, dans lequel l'appareil (36) est un équipement de limitation du danger.

9. Système d'automatisation de sécurité selon la revendication 1, dans lequel the signal de signature audible et le signal de commande sont envoyés via une liaison sans fil.

10. Système d'automatisation de sécurité selon la revendication 1, dans lequel le microphone (54) fait partie d'un détecteur de fumée ayant un double circuit de fonctionnement pour produire une alarme audible et détecter une signature audible.
